(19) Europäisches Patentamt
European Patent Office
Office européen des brevets

(11) Numéro de publication: **0 156 726**
**B1**

# (12) FASCICULE DE BREVET EUROPÉEN

(45) Date de publication du fascicule du brevet: **13.01.88**

(51) Int. Cl.⁴: **C 09 K 19/02**, C 09 K 19/20, C 09 K 19/46

(21) Numéro de dépôt: **85400508.9**

(22) Date de dépôt: **15.03.85**

**(54) Procédé d'obtention d'un cristal liquide smectique C chiral ferroélectrique, cristal liquide et dispositif de visualisation utilisant ce cristal liquide.**

(30) Priorité: **20.03.84 FR 8404286**

(43) Date de publication de la demande:
**02.10.85 Bulletin 85/40**

(45) Mention de la délivrance du brevet:
**13.01.88 Bulletin 88/2**

(84) Etats contractants désignés:
**DE GB NL SE**

(56) Documents cité:
**FR-A-2 257 917**
**FR-A-2 308 676**
**FR-A-2 400 545**
**FR-A-2 415 133**

**CHEMICAL ABSTRACTS, vol. 93, 1980, page 950, no. 86116x, Columbus, Ohio, US; M.V. LOSEVA et al.: "Change in spontaneous polarization in homologous series of chiral smectic liquid crystals"**

(73) Titulaire: **THOMSON- CSF, 173, Boulevard Haussmann, F-75379 Paris Cédex 08 (FR)**

(72) Inventeur: **Decobert, Guy, THOMSON- CSF SCPI 173, bld Haussmann, F-75379 Paris Cedex 08 (FR)**
Inventeur: **Dubois, Jean- Claude, THOMSON- CSF SCPI 173, bld Haussmann, F-75379 Paris Cedex 08 (FR)**

(74) Mandataire: **Lepercque, Jean, THOMSON- CSF SCPI 19, avenue de Messine, F-75008 Paris (FR)**

EP 0 156 726 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention concerne un procédé d'obtention de cristaux liquides smectiques ferroélectiques à large pas et utilisables pour des températures proches de la température ambiante. L'invention concerne également les produits obtenus par le procédé ainsi que leur utilisation dans des dispositif s d'affichage.

Les cristaux liquides occupent aujourd'hui une place très importante dans le domaine des dispositifs de visualisation. Ceci est dû en particulier aux effets électrooptiques procurés par les cristaux liquides du type nématique en hélice. Le grand succès de cet effet réside dans sa simplicité de mise en ouvre, ses faibles tensions de commande et sa faible consommation. Le principal inconvénient de ces dispositifs est que, malgré de très nombreuses recherches dans ce domaine, leur taux de multiplexage semble limité à une centaine. Ceci est un handicap certain dans l'utilisation de cet effet pour les écrans matriciels à forte définition, par exemple comprenant plusieurs dizaines de lignes de caractère. Aussi les recherches se sont-elles tournées vers des effets électrooptiques à mémoire pour lesquels le taux de multiplexage est théoriquement infini.

De nombreux cristaux liquides nématiques présentent une modification progressive d'orientation par variation de la composante parallèle de la permittivité diélectrique quand ils sont soumis à des champs électriques alternatifs de fréquences croissantes. Cette propriété a été exploitée par FR 2 257 917, notamment dans le cas de mélanges de cristaux liquides, pour opérer dans le domaine nématique par modulation de fréquence.

Les effets électrooptiques observés dans les cristaux liquides smectiques ferroélectriques offrent une solution intéressante aux problèmes des effets à mémoire intrinsèque. Les études menées dans de nombreux laboratoires ont montré que l'on pouvait obtenir un effet électrooptique par retournement de la polarisation de domaines ferroélectriques dans des phases smectiques ferroélectriques. Par rapport aux smectiques A dans lesquels les molécules sont normales au plan des couches smectiques, les molécules des cristaux liquides smectiques ferroélectriques présentent en général une inclinaison par rapport au plan des couches. Il se produit également une rotation de la direction d'inclinaison de ces molécules autour de la normale au plan des couches et ceci selon une hélice de faible pas (quelques micromètres).

CLARK et LAGERWALL ont montré, dans la demande de brevet européen publiée sous le numéro 0 032 362 et déposée le 10 Janvier 1980, qu'avec des cellules de faible épaisseur, il est possible d'induire deux directions stables d'orientation des molécules de cristal liquide qui peuvent constituer des domaines d'axes optiques et de polarisations opposées. La commutation entre ces deux directions se fait par application d'un champ électrique approprié. Ces cellules, utilisées comme valves optiques élémentaires, ont pour principales caractéristiques: d'être des systèmes bistables donc à mémoire, de posséder de faibles temps de réponse, de demander de faibles tensions de commande et de présenter une faible consommation d'énergie.

Cependant, ce type de dispositif présente deux inconvénients majeurs. Premièrement, il necessite un traitement de surface réalisé sur les deux faces internes des lames supports de la cellule qui doit conduire à une énergie équivalente pour les deux textures (correspondant aux deux directions stables d'orientation des molécules) afin que celles-ci puissent exister simultanément en l'absence de champ électrique appliqué. Ce traitement doit cependant permettre le glissement des molécules en surface lors de la commutation d'une texture vers une autre. Un traitement de surface présentant ces deux propriétés est très difficile à réaliser de façon reproductible. Deuxièment, ces dispositifs nécessitent le blocage par des surfaces limites de l'hélice due à la chiralité des molécules de cristal liquide ferroélectrique et imposent en conséquence des épaisseurs très faibles à la couche de cristal liquide. Ces épaisseurs (inférieures à 3 micromètres) sont très difficiles à obtenir industriellement sur de grandes surfaces.

Afin de pallier ces inconvénients, la présente invention propose de nouveaux cristaux liquides présentant une phase smectique C chirale à grand pas. Ces cristaux liquides sont obtenus par mélange de composés dont les proportions dans le mélange déterminent le pas de l'hélice. Les produits obtenus ont également l'avantage de présenter une phase smectique C chirale à une température proche de la température ambiante.

L'invention a donc pour objet un procédé d'obtention d'un cristal liquide smectique C chiral ferroélectrique présentant un pas d'hélice déterminé, caractérisé en ce qu'il consiste à réaliser un mélange entre au moins deux composés organiques miscibles entre eux, un premier composé présentant une phase smectique C, et un second composé présentant une structure chirale, et a ajuster les proportions relatives desdits composés dans le mélange de manière à imposer ledit pas d'hélice.

L'invention a aussi pour objet le cristal liquide obtenu par ce procédé.

L'invention a encore pour objet l'utilisation d'un tel cristal liquide dans des dispositifs de visualisation.

L'invention sera mieux comprise et d'autres avantages apparaîtront au moyen de la description qui va suivre et des figures annexées parmi lesquelles:

- la figure 1 est illustrative de la disposition des molécules d'un cristal liquide en phase $S_C$*,
- la figure 2 est un diagramme de phases d'un mélange selon l'invention.
- la figure 3 est un diagramme donnant l'évolution du pas p en fonction de la proportion d'un des constituants d'un mélange,
- les figures 4 et 5 sont des diagrammes de phases de mélanges selon l'invention,
- la figure 6 représente un écran de visualisation.

La principale différence entre les cristaux liquides smectiques A et C réside dans le caractère biaxe des smectiques C, c'est-à-dire la rupture de la symétrie parfaite de révolution autour du vecteur directeur moyen représentant le grand axe moléculaire. Les grands axes moléculaires ne sont donc plus perpendiculaires en

moyenne au plan des couches smectiques, mais inclinés d'un angle Θ appelé angle d'inclinaison. La figure 1 illustre la disposition des molécules d'un cristal liquide en phase smectique C chirale $S_C^*$. Ces molécules ne sont pas superposables à leur image dans un miroir. Elles sont représentees par des bâtonnets 1. Les grands axes moléculaires ne sont pas en moyenne perpendiculaires au plan P des couches mais inclinés. L'angle d'inclinaison Θ est l'angle qui existe entre la normale z'z aux plans des couches et la direction des grands axes. L'absence de plan de symétrie pour les molécules fait que la phase présente un moment dipolaire spontané perpendiculaire aux plans d'inclinaison des molécules. Il s'ensuit une polarisation permanente non nulle et perpendiculaire au grand axe moléculair ($\rightarrow$n).

La chiralité confère à la phase smectique C chirale une structure hélicoïdale comme pour les cholestériques mais avec, à présent, une structure des molécules en couches telle que le vecteur directeur représentatif du grand axe moléculaire précesse autour de la normale aux couches. Le vecteur $\rightarrow$n peut être assimilé à la génératrice d'un cône. Il est défini par les coordonnées suivantes: l'angle d'inclinaison θ, l'angle azimuthal Ø et l'altitude z.

D'un point de vue macroscopique, le matériau n'a pas de polarisation spontanée détectable par symétrie de révolution. Pour mettre en évidence la polarisation permanente, il faut imposer à l'hélice une distorsion obtenue par un champ électrique ou alors bloquer l'hélice en imposant des contraintes d'épaisseur au materiau. CLARK et LAGERWALL ont montré, dans la demande de brevet citée plus haut, qu'il est possible avec des cellules de faible épaisseur et traitées de façon à orienter les molécules en configuration planaire, de bloquer le pas de l'hélice et d'induire par conséquent deux directions stables d'orientation des molécules de polarisation macroscopique opposée. L'effet électrooptique est alors obtenu par retournement des dipôles ferroélectriques sous l'influence d'un champ électrique appliqué. Le retournemenet des dipôles est obtenu par couplage entre le champ électrique et la polarisation permanente.

Les premières synthèses de cristaux liquides smectiques C chiraux ferroélectriques concernent la famille des bases de SCHIFF. Ces composés résistent mal à l'action de la vapeur d'eau et ont des points de fusion élevés ainsi que des pas d'hélice faibles (inférieurs à 1 micromètre). On peut citer par exemple le p-décyloxybenzylidène p'-amino 2 méthylbutylcinnamate (DOBAMBC) et le p-hexyloxybenzylidène p'-amino 2 chloro α-propylcinnamate (HOBACPC). Ils possèdent les transistions de phases suivantes:

DOBAMBC :

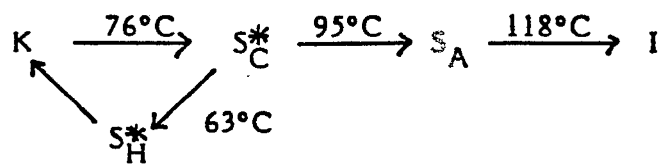


HOBACPC : $K \xrightarrow{60°C} S_H^* \xrightarrow{64°C} S_C^* \xrightarrow{78°C} S_A \xrightarrow{135°C} I$

L'invention propose des cristaux liquides obtenus par mélange d'au moins deux composés organiques: un composé A présentant une phase smectique C et un composé B pouvant être ou non mésomorphe mais possédant un ou plusieurs atomes asymétriques. Les composés A et B doivent également répondre à des critères de miscibilité l'un avec l'autre. Des mélanges de ces composés sont étudiés par microscopie optique et on en déduit leur diagramme de phases. On constate alors que le mélange présente une phase smectique C chirale ferroélectrique et que le pas de l'hélice est fonction des proportions des constituants du mélange. L'observation microscopique fournit également des renseignements quant à la valeur du pas de l'hélice du cristal liquide $S_C^*$ obtenu par le mélange. Il est alors possible de faire une étude du pas de l'hélice du cristal liquide $S_C^*$ obtenu en fonction de la concentration en composé chiral. Le pas augmente lorsque la concentration du composé chiral (composé B) dans le mélange diminue. La phase $S_C$ du composé A peut être considérée en fait comme une phase $S_C^*$ à pas infini. Plusieurs exemples de mélanges sont donnés ci-après à titre non limitatif, dont l'étude comparative du pas de l'hélice a été faite à température constante puisque ce pas est fonction de la température.

Les premiers exemples de mélanges sont réalisés à partir des composés A et B suivants:

- composé A : 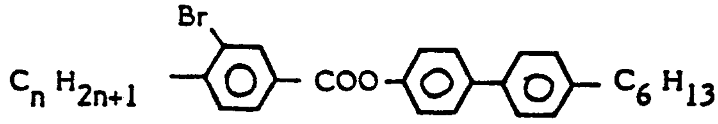

dont les transitions de phases pour n=6, 7 et 8 sont résumées dans le tableau I ci-dessous:

**TABLEAU I**

| n | K | | $S_C$ | | N | | I | |
|---|---|---|---|---|---|---|---|---|
| 6 | · | 42°C | · | 86°C | · | 109°C | · | |
| 7 | · | 56°C | · | 84,5°C | · | 109°C | · | |
| 8 | · | 116°C | · | 120°C | · | 144°C | · | |

- composé B:

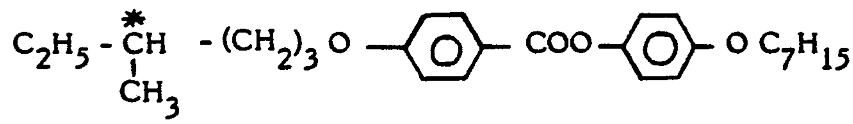

que possède les trasitions de phases suivantes:

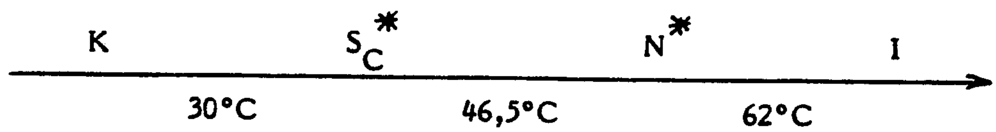


La figure 2 est un diagramme de phases correspondant à un mélage des composés A (pour n=6) et B décrits ci-dessus. Les ordonnées du diagramme sont graduées en degrés centigrades. L'axe des ordonnées de gauche correspond au composé A, celui de droite au composé B. L'axe des abscisses est gradué en pourcentage du composé B dans le mélange, de 0 à 100 %. Les différentes phases révélées par ce diagramme sont les suivantes, en partant des températures les plus basses vers les plus élevées: phases cristalline, smectique C chiral, cholestérique et isotrope. Des mélanges de différente concentration en composé B ont été étudiés pour une température maintenue constante a 50° C. Le tableau II donne l'évolution du pas p de l'hélice pour le mélange en fonction de la concentration $C_B^*$ du composé chiral (composé B) dans le mélange.

**TABLEAU II**

| C*C | 100 % | 50 % | 35 % | 20 % |
|---|---|---|---|---|
| p | ⩽ 1 µm | 4 à5 µm | 9à 10 µm | 20 µm |

D'après le diagramme de la figure 2 et le tableau ci-dessus on constate qu'un mélage comprenant 20 % de composé B et 80 % de composé A présente une phase smectique C chirale entre environ 38,5°C et 76°C pour un pas de 20 µm. A tibe de comparaison les composés désignés sous les appellations DOBAMBC et HOBACPC présentent une phase $S_C^*$ entre 75° et 80° C. Le gain en température présenté par le mélange considéré est de l'ordre de 40° C. C'est un avantage notable. Un autre avantage est constitué par le pas de l'hélice: 20 µm pour le mélange selon l'invention au lieu des 3 µm inhérents aux produits de l'art connu. D'autres mélanges selon l'invention sont également à retenir. Pour $C_B^*$ compris entre 20 et 35 % le pas de l'hélice est entièrement satisfaisant pour une utilisation dans des dispositifs de visualisation d'autant plus que le mélange devient $S_C^*$ pour des températures plus basse encore que pour $C_B^*=20$ %.

La figure 3 est un diagramme donnant l'évolution du pas p de l'hélice en fonction de l'inverse de la concentration en composé B. Ce diagramme est tracé d'après les données du tableau II. La courbe 3 montre que, au moins dans une certaine gamme, le pas est une fonction linéaire de $\frac{1}{C_B^*}$. A partir de cette courbe, il est facile de déterminer pour le mélange considéré quelle doit être la proportion du composé B pour obtenir un pas choisi à l'avance.

Le diagramme de phases de la figure 2 a été tracé pour un mélange comprenant un composé A pour lequel n=6. Pour d'autres valeurs de n, notamment celles mentionnées au tableau I, les mélanges présentent également une phase $S_C^*$ pourvu que le composé A présente lui-même une phase $S_C$. Les mélanges correspondants possèdent alors un diagramme de phases du type de celui représenté à la figure 2.

Ce type de diagramme de phase est également valable pour les composés A de la famille suivante:

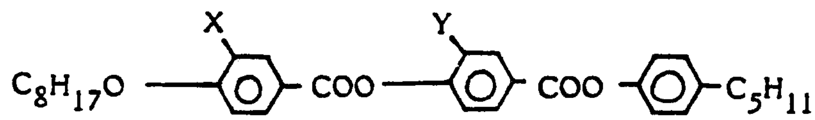

où les substitutions X et Y peuvent indifféremment être le brome, le chlore ou l'élément cyano. On peut par exemple réaliser des mélanges à partir du compose:

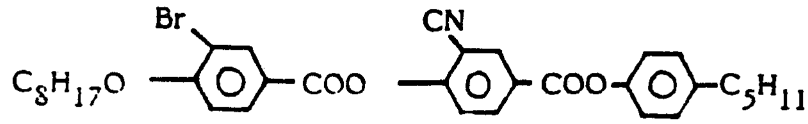

possédant les transitions de phases suivantes:

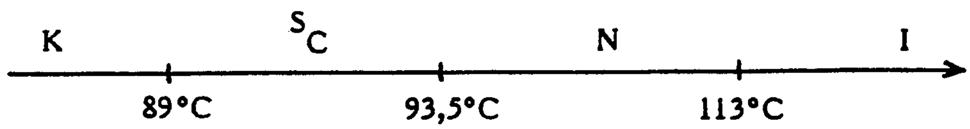


Le composé B peut être celui cité plus haut ou d'autres composés mésomorphes ou non mais possédant une structure chirale. Il est préférable de choisir leur point de fusion ou de clarification suivant le cas de façon à obtenir un mélange présentant une phase $S_C$* pour une température proche de la température ambiante.

Une deuxième série d'exemples est constituée de mélanges obtenus à partir d'un composé B, c'est-à-dire possédant une structure chirale, mais qui n'est pas mésomorphe. Des mélanges présentant une phase $S_C$* et un pas de l'ordre de 10 µm peuvent être obtenus à partir d'un composé A de formule:

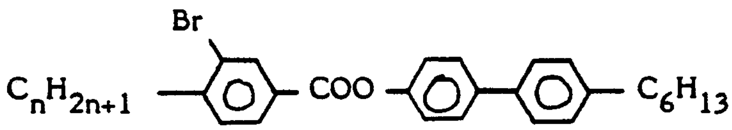

avec n=6 ou 7 et d'un composé B de formule:

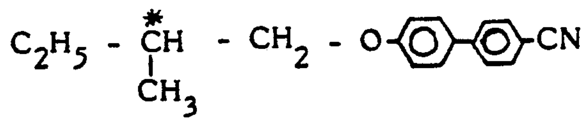

et qui possède la transition de phase suivante:

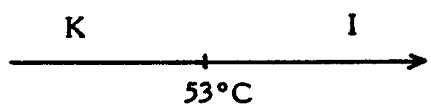


La figure 4 représente le diagramme de phases obtenu pour le mélange des composés A (pour n=6) et B ci-dessus. Au vu de la figure 4, on constate que la succession des phases n'est pas la même selon la composition du mélange. Suivant la proportion de composé B dans le mélange, on peut ou non obtenir une phase cholestérique N* (pour des mélanges à faible concentration de composé B) et également une phase smectique A. On obtient dans tous les cas de mélange une phase $S_C$* dont l'étendue en température et le pas dépendent des proportions en composés A et B. Un cas intéressant est celui dun mélange comprenant 80 % de composé A (n=6) et 20 % de composé B. Un tel mélange présente uffi phase $S_C$* qui s'étend d'environ 35° à 80°C pour un pas p de 10 µm. Ces deux caractéristiques sont pleinement satisfaisantes dans le cas de l'utilisation de ce mélange dans des dispositifs de visualisation.

Une troisième série d'exemples est constituée de mélanges obtenus à partir des composés A et B suivants:.

- composé A:

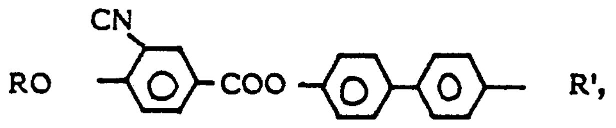

R et R' étant des radicaux alkyles,
- composé B:

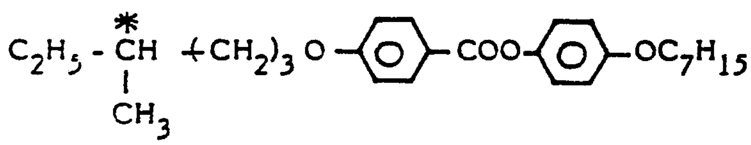

déjà utilisé dans la première série d'exemples.

La figure 5 représente un diagramme de phases obtenu pour le mélange des composés A (avec $R=C_8H_{17}$ et $R'=C_6H_{13}$) et B ci-dessus. Le composé A choisi présente à l'état pur une succession de phases cristalline $S_C$, $S_A$ et isotrope. Le composé B présente une succession de phases cristalline, $S_C$*, N* isotrope. Le mélange obtenu présente toujours une phase $S_C$* et suivant les proportions de ses constituants: une phase $S_A$ ou une phase cholestérique N*. Un mélange comprenant 70 % de composé A (avec $R=C_8H_{17}$ et $R'=C_6H_{13}$) et 30 % de composé B possède un pas p de l'ordre de 10 µm.

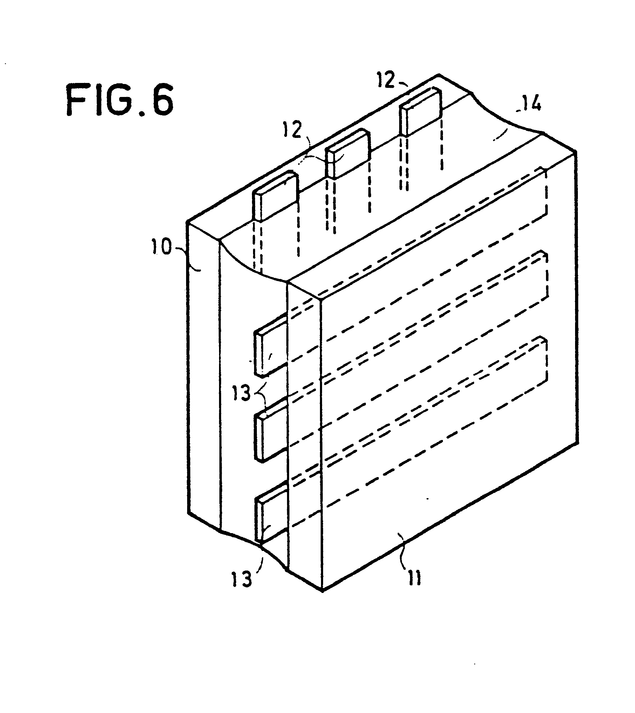

Les mélanges selon l'invention peuvent avantageusement être utilisés dans des dispositifs de visualisation à cristaux liquides, à mémoire et à commande électrique. On peut en particulier les employer dans des dispositifs à accès matriciel. La figure 6, qui représente un écran de visualisation, est illustrative de cette application. On distingue sur cette figure, deux lames de verre 10 et 11 qui supportent respectivement des électrodes de colonnes 12 et des électrodes de lignes 13. L'espace défini entre les lames 10 et 11 par des cales d'épaisseur non représentées est de l'ordre de 10 à 20 micromètres selon le mélange utilisé. Cet espace est rempli par un film de cristal liquide ferro-électrique 14 constitué par un mélange selon l'invention.

Ce mélange peut avantageusement être celui décrit dans la deuxième série d'exemples et comprenant 80 % d'un composé A de formule

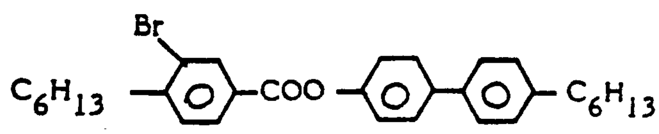

et 20 % d'un composé B de formule

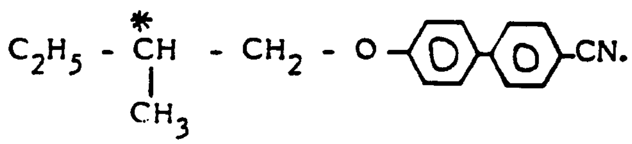

Un tel mélange presente alors une phase $S_C$* s'étendant de 35°C à 80°C environ, pour un pas p de 10 µm. Sur les faces internes de l'écran, on a déposé une couche d'alignement donnant une orientation planaire aux molécules du cristal liquide. Le film de cristal liquide est ainsi constitue de couches perpendiculaires aux lames 10 et 11. La couche d'alignement est par exemple constituée par une évaporation oblique d'oxyde de silicium SiO ou d'une couche de polymère organique frotté ou non. Le fonctionnement de l'écran sous l'effet de champs électriques appliqués par l'intermédiaire des électrodes de lignes et de colonnes procède alors de l'enseignement divulgué par CLARK et LAGERWALL dans la demande de brevet citée. L'écran selon l'invention présente le grand avantage d'être beaucoup plus facilement réalisable que celui de l'art connu surtout en grande surface où les contraintes d'épeisseur sont plus importantes.

Il entre également dans le cadre de l'invention d'ajouter au moins un troisième composé organique au mélange selon l'invention et ceci à des fins diverses: pour abaisser encore les températures de transition, pour améliorer la stabilite du mélange vis-à-vis d'agents corrosifs. On peut également par l'incorporation de dopants appropriés éliminer une phase non désirée.

**Revendications**

1. Procédé d'obtention d'un cristal liquide smectique C chiral ferroélectrique présentant un pas (p) d'hélice déterminé, caractérisé en ce qu'il consiste à réaliser un mélange entre au moins deux composés organiques miscibles entre eux, un premier composé (A) présentant une phase smectique C et un second composé (B) présentant une structure chirale, et à ajuster les proportions relatives desdits composés dans le mélange de

manière à imposer ledit pas d'helice.

2. Procédé selon la revendication 1, caractérisé en ce que le second composé (B) est mésomorphe.

3. Cristal liquide smectique C chiral ferroélectrique, caractérisé en ce qu'il est obtenu par le procédé selon l'une des revendications 1 ou 2.

4. Cristal liquide selon la revendication 3, caractérisé en ce que le premirr composé (A) répond à la formule chimique suivante:

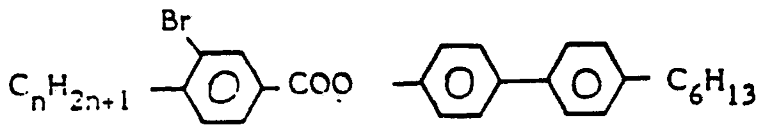

n étant un nombre entier et que le second composé (B) répond à la formule chimique suivante:

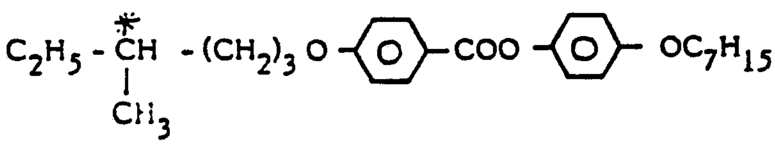

5. Cristai liquide selon la revendication 4, caractérisé en ce que la valeur du nombre n pour le premier composé (A) est 6.

6. Cristal liquide selon la revendication 5, caractérisé en ce que les proportions des premier et second composé (A) et (B) dans le mélange sont respectivement 80 % et 20 %.

7. Cristal liquide selon la revendication 3, caractérisé en ce que le premier composé (A) répond à la formule chimique suivante:

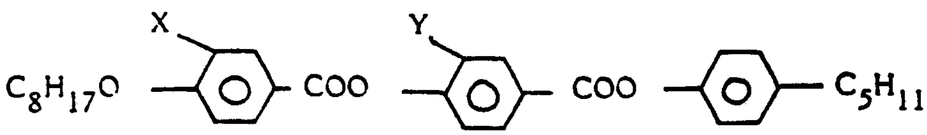

et que le second composé (B) répond à la formule chimique suivante:

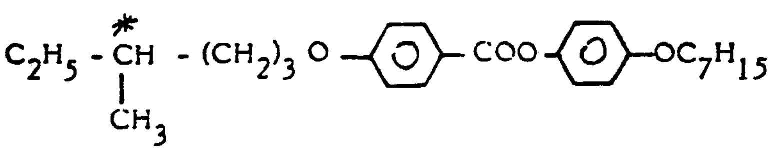

8. Cristal liquide selon la revendication 7, caractérisé en ce que pour le premier composé (A), X est le brome et Y le radical cyano.

9. Cristal liquide selon la revendication 3, caractérisé en ce que le premier composé (A) répond à l formule chimique suivante:

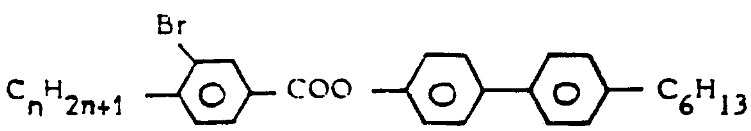

n étant un nombre entier et que le second composé (B) répond à la formule chimique suivante:

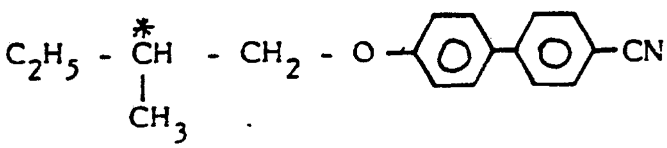

valeur du nombre n pour le premier composé (A) est 6.

11. Cristal liquide selon la revendicaton 10, caractérisé en ce que les proportions des premier et second composé (A et B) dans le mélange sont respectivement 80 % et 20 %.

12. Cristal liquide selon la revendication 3, caractérisé en ce que le premier composé (A) répond à la formule chimique suivante:

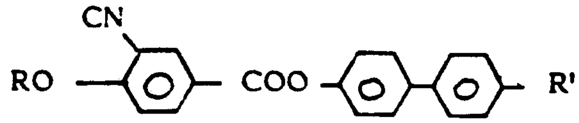

et que le second composé (B) répond à la formule chimique suivante:

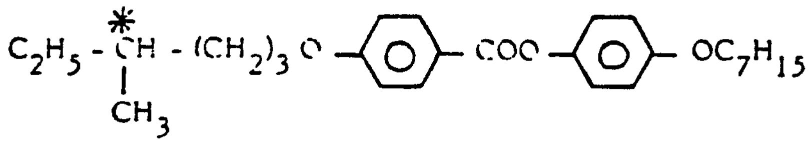

13. Cristal liquide selon le revendication 12, caractérisé en ce que, pour le premier composé (A),$R=C_8H_{17}$ et $R'=C_6H_{13}$.

14. Cristal liquide selon la revendication 13, caractérisé en ce que les proportions des premier et second composé (A et B) dans le mélange sont respectivement 70 % et 30 %.

15. Dispositif de visualisation d'informations à mémoire et a commande électrique comportant une cellule comprenant un film de cristal liquide smectique C chiral (14) possédant des propriétés ferroélectriques, ledit film étant disposé entre deux lames parallèles et transparentes (10 et 11), chacune desdites lames supportant sur sa face interne au moins une électrode transparente permettant l'application d'un champ électrique de commande dans au moins une région dudit film, lesdites lames ayant reçu des traitements de surface qui contribuent à l'existence, au sein dudit film d'au moins deux textures décelables, caractérisé en ce que ledit cristal liquide smectique C chiral ferroléctrique est un cristal liquide selon l'une quelconque des revendications 3 à 14.

16. Dispositif de visualisation selon la revendication 15, caractérisé en ce que les électrodes desdites lames sont disposées en lignes (13) et en colonnes (12) pour définir une matrice d'adressage.

**Patentansprüche**

1. Verfahren zur Herstellung eines smektisch-C-chiralen ferroelektrischen Flüssigkristalls mit einem bestimmten Spiralwindungsschritt (p), dadurch gekennzeichnet, daß man mindestens zwei mischbare organische Verbindungen miteinander mischt, nämlich eine Verbindung (A), die eine smektische C-Phase besitzt, und eine Verbindung (B), die eine chirale Struktur aufweist, und daß man die relativen Mischungsanteile dieser Verbindungen so festlegt, daß sich dieser Windungsschritt einstellt.

2. Verfahren nach Anspruch 1, dadurch gekennzeichnet, daß die zweite Verbindung (B) liquokristallin ist.

3. Smektisch-C-chiraler ferroelektrischer Flüssigkristall, dadurch gekennzeichnet, daß er durch das Verfahren nach einem der Ansprüche 1 oder 2 erhalten wurde.

4. Flüssigkristall nach Anspruch 3, dadurch gekennzeichnet, daß die erste Verbindung (A) der folgenden chemischen Formel entspricht:

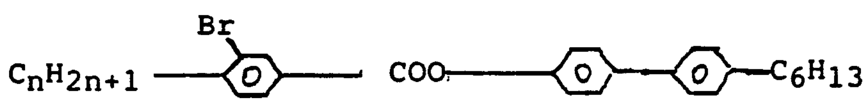

wobei n eine ganze Zahl ist, und daß die zweite Verbindung (B) der folgenden chemischen Formel entspricht:

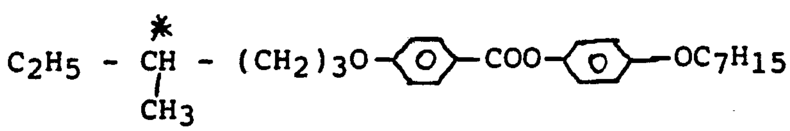

5. Flüssigkristall nach Anspruch 4, dadurch gekennzeichnet, daß die Zahl n für die erste Verbindung (A) 6 ist.

6. Flüssigkristall nach Anspruch 5, dadurch gekennzeichnet, daß die Mischungsanteile der ersten (A) und der zweiten Verbindung (B) 80 % bzw. 20 % betragen.

7. Flüssigkristall nach Anspruch 3, dadurch gekennzeichnet, daß die erste Verbindung (A) der folgenden chemischen Formel entspricht:

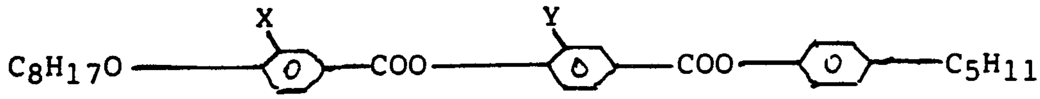

und daß die zweite Verbindung (B) der folgenden chemischen Formel entspricht:

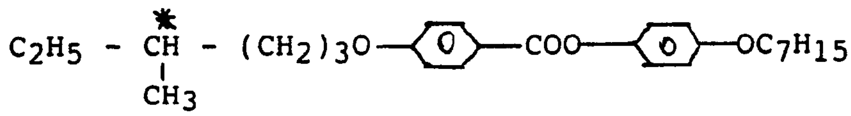

8. Flüssigkristall nach Anspruch 7, dadurch gekennzeichnet, daß in der ersten Verbindung (A) X für Brom und Y für das Cyano-Radikal steht.

9. Flüssigkristall nach Anspruch 3, dadurch gekennzeichnet, daß die erste Verbindung (A) der folgenden chemischen Formel entspricht:

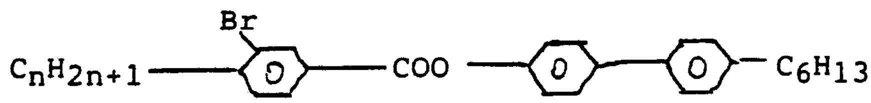

wobei n eine ganze Zahl ist, und daß die zweite Verbindung (B) der folgenden chemischen Formel entspricht:

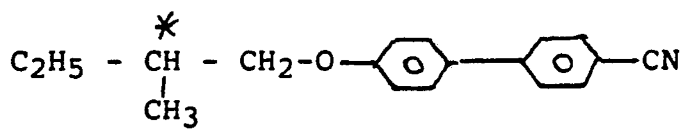

10. Flüssigkristall nach Anspruch 9, dadurch gekennzeichnet, daß die Zahl n für die erste Verbindung (A) 6 ist.

11. Flüssigkristall nach Anspruch 10, dadurch gekennzeichnet, daß die Anteile der ersten (A) und der zweiten Verbindung (B) in der Mischung 80 % bzw. 20 % betragen.

12. Flüssigkristall nach Anspruch 3, dadurch gekennzeichnet, daß die erste Verbindung (A) der folgenden chemischen Formel entspricht:.

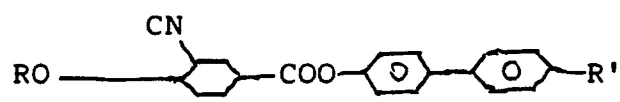

Formel entspricht:

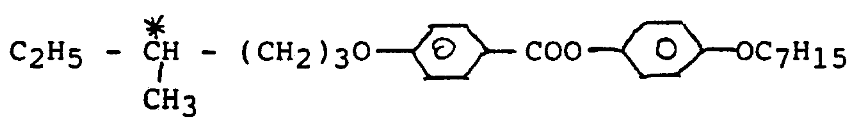

daß für die erste Verbindung (A) gilt:
$R = C_8H_{17}$ und $R' = C_6H_{13}$

14. Flüssigkristall nach Anspruch 13, dadurch gekennzeichnet, daß die Mischungsanteile der ersten (A) und der zweiten Verbindung (B) 70 % bzw 30 % betragen.

15. Informationsanzeigevorrichtung mit Speicherwirkung und mit elektrischer Steuerung, mit einer Zelle, die einen Film aus smektisch-C-chiralem Flüssigkristall (14) aufweist, welcher ferroelektrische Eigenschaften besitzt und zwischen zwei parallelen und transparenten Plättchen (10 und 11) liegt, wobei jedes der Plättchen auf seiner Innenseite mindestens eine transparente Elektrode trägt, durch die ein elektrisches Steuerfeld an mindestens einen Bereich des Films angelegt werden kann, und wobei die Plättchen eine Oberflächenbehandlung erfahren haben, die zur Existenz von mindestens zwei unterscheidbaren Texturen in dem Film beitragen, dadurch gekennzeichnet, daß der smektisch-C-chirale ferroelektrische Flüssigkristall ein Flüssigkristall nach einem beliebigen der Ansprüche 3 bis 14 ist.

16. Anzeigevorrichtung nach Anspruch 15, dadurch gekennzeichnet, daß die Elektroden der Plättchen in Zeilen (13) und Spalten (12) angeordnet sind, um eine Adressiermatrix zu bilden.

**Claims**

1. A method for the preparation of a smectic-C-chiral ferroelectric liquid cristal presenting a predetermined helix pitch (p), characterized in that it consists in realizing a mixture of at least two intermiscible organic compounds, a first compound (A) having a smectic-C phase, and a second compound (B) having a chiral structure, and in adjusting the relative proportions of said compounds in the mixture in such a way that said helix pitch is imposed.

2. A method according to claim 1, characterized in that the second compound (B) is mesomorphous.

3. A ferroelectric smectic-C-chiral liquid cristal, characterized in that it is obtained by the method of according to one of claims 1 or 2.

4. A liquid cristal according to claim 3, characterized in that the first compound (A) corresponds to the following chemical formula:

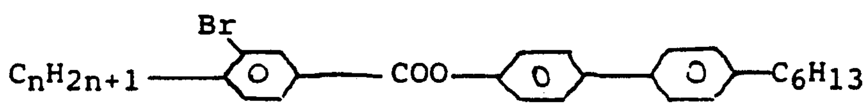

n being an integer, and that the second compound (B) corresponds to the following formula:

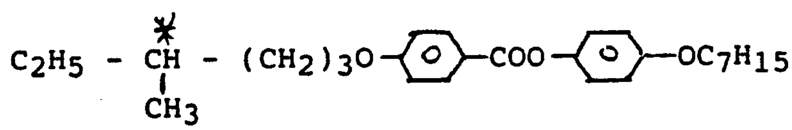

5. A liquid cristal according to claim 4 characterized in that the number n for the first compound (A) is 6.

6. A liquid cristal according to claim 5, characterized in that the proportions of the first (A) and the second compound (B) in the mixture are respectively 80 % and 20 %.

7. A liquid cristal according to claim 3, characterized in that the first compound (A) corresponds to the following chemical formula:

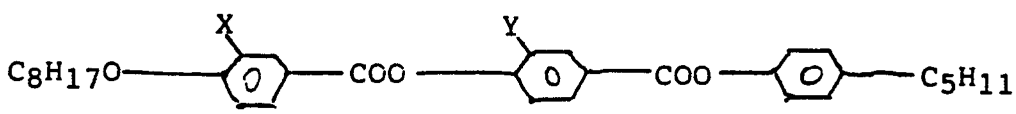

and that the second compound (B) corresponds to the following chemical formula:.

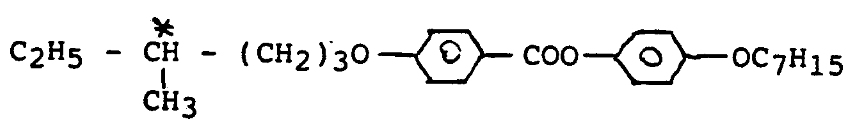

8. A liquid cristal according to claim 7, characterized in that for the first compound (A) X means bromine and Y the cyano radical.

9. A liquid cristal according to claim 3, characterized in that the first compound (A) corresponds to the following chemical formula:

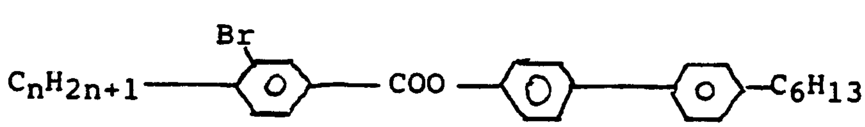

n being an integer, and that the second compound (B) corresponds to the following chemical formula:

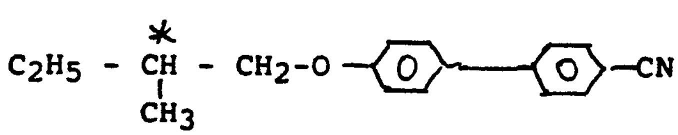

10. A liquid cristal according to claim 9, characrerized in that the number n for the first compound (A) is 6.

11. A liquid cristal according to claim 10, characterized in that the proportions of the first (A) and the second compound (B) are respectively 80 % and 20 %.

12. A liquid cristal according to claim 3, characterized in that the first compound (A) corresponds to the following chemical formula:

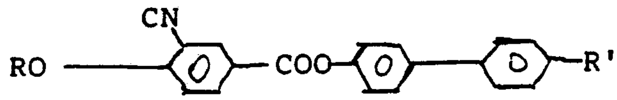

and that the second compound (B) corresponds to the following chemical formula:

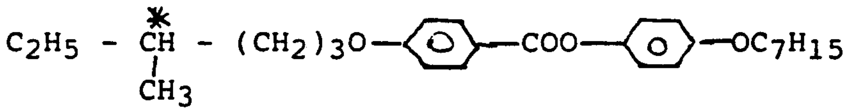

13. A liquid cristal according to claim 12, characterized in that for the first compound (A) $R = C_8H_{17}$ and $R' = C_6H_{13}$

14. A liquid cristal according to claim 13, characterized in that the proportions of the first (A) and the second compounds (B) in the mixture are respectiveley 70 % and 30 %.

15. A data display device having memorizing properties and being electrically controlled, this device including a cell comprising a film of a smectic-C-chiral liquid cristal (14) which has ferroelectric properties and which is disposed between two parallel and transparent plates (10 and 11), each one of these plates supporting, on its inner surface, at least one transparent electrode for applying an electric control field to at least one zone of said film, said plates having been surface treated which treatment contributes to the existence of at least two detectable textures, characterized in that the ferroelectric smectic-C-chiral liquid cristal is a liquid cristal according to anyone of claims 3 to 14.

16. A display device according to claim 15, characterized in that the electrodes of these plates are arranged in lines (13) and columns (12) for defining an addressing matrix.

# FIG.1

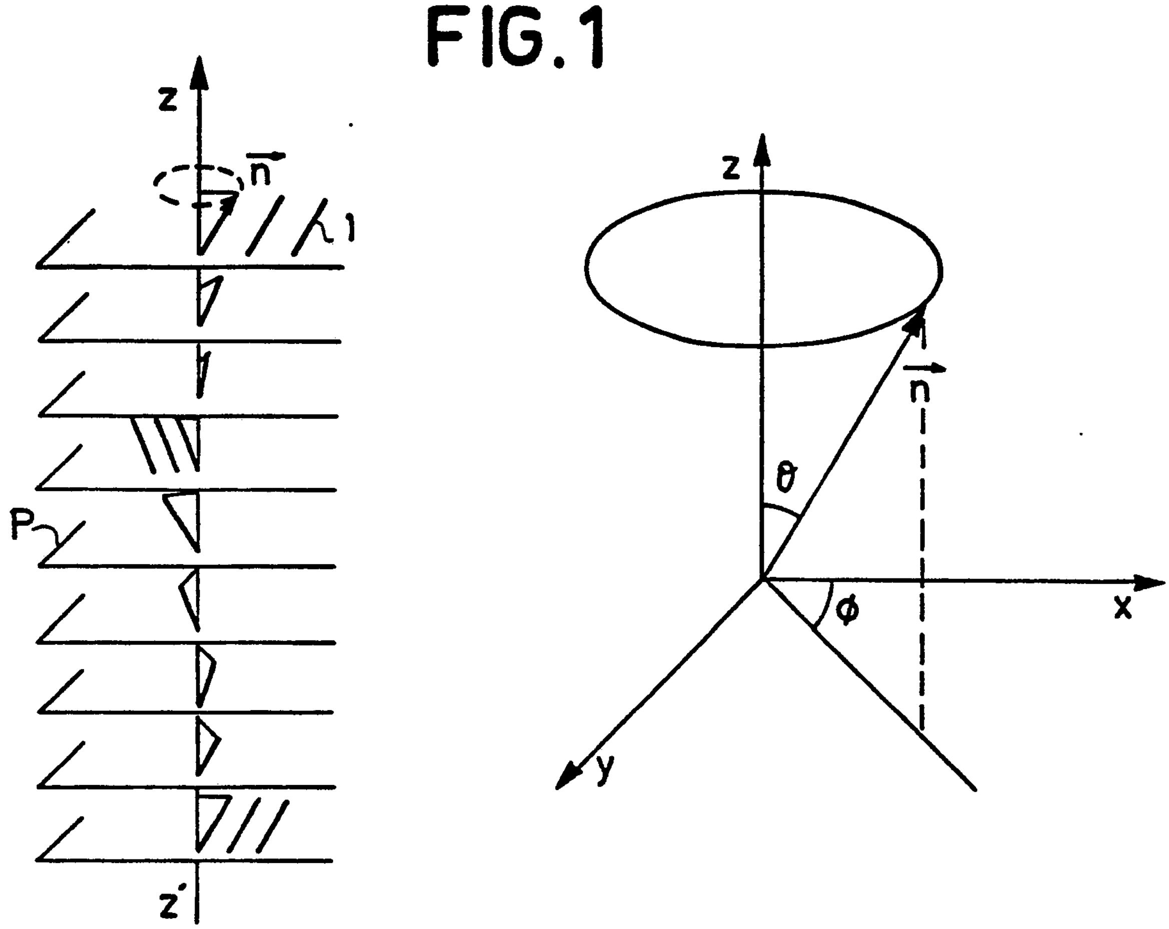


# FIG.3

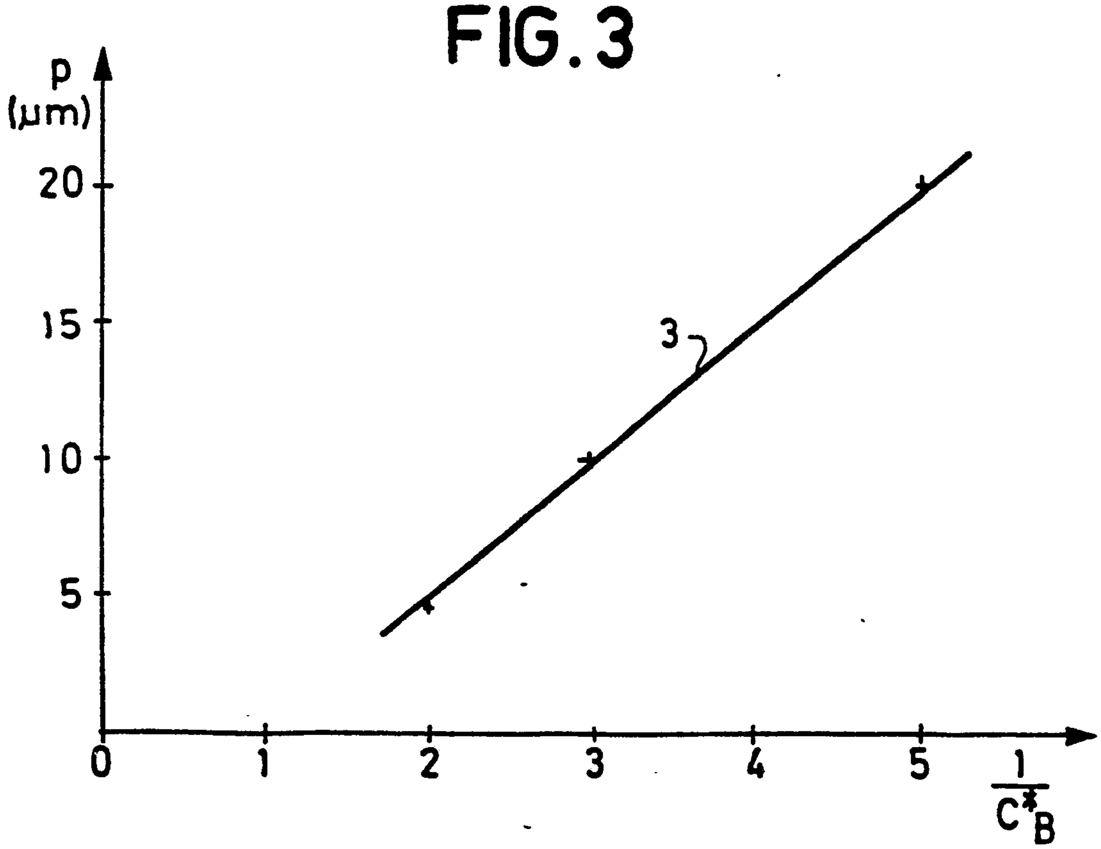

FIG. 2

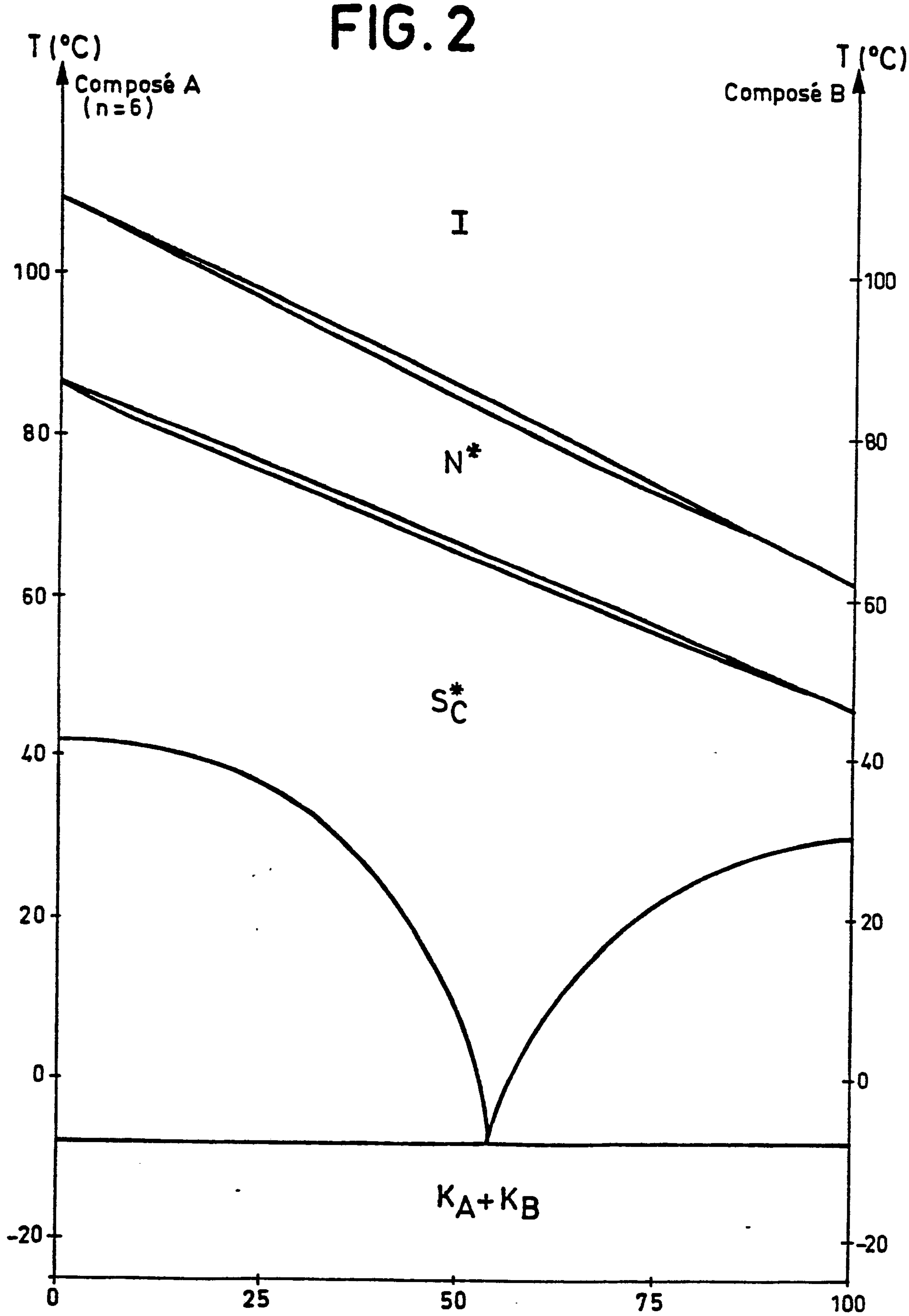
T (°C)
Composé A
(n=6)
T (°C)
Composé B
I
N*
S*C
KA+KB
100
80
60
40
20
0
-20
0
25
50
75
100

FIG.4

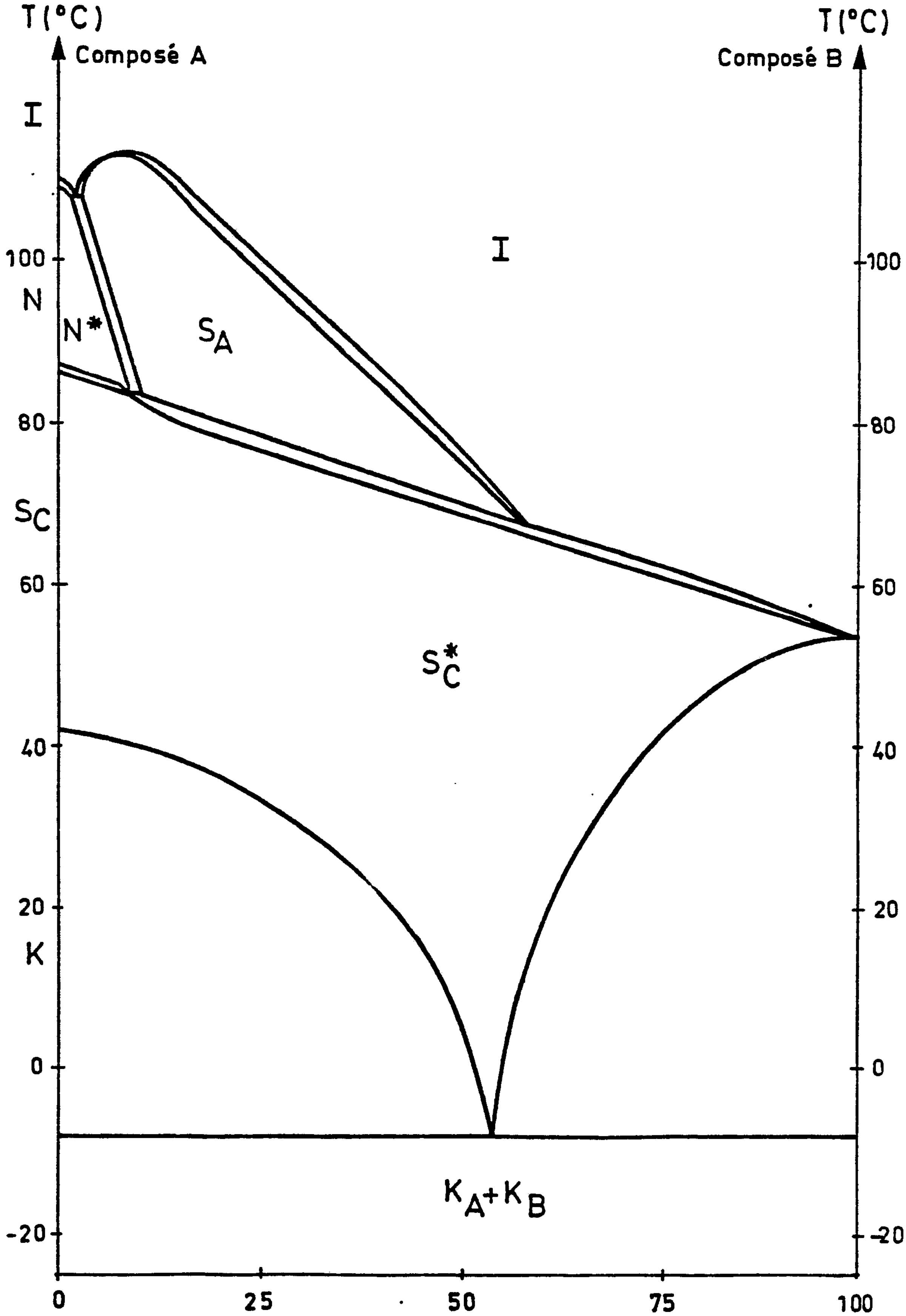
T(°C)
Composé A
T(°C)
Composé B
I
I
N
N*
$S_A$
$S_C$
$S_C^*$
K
$K_A+K_B$
100
80
60
40
20
0
-20
0
25
50
75
100

FIG. 5

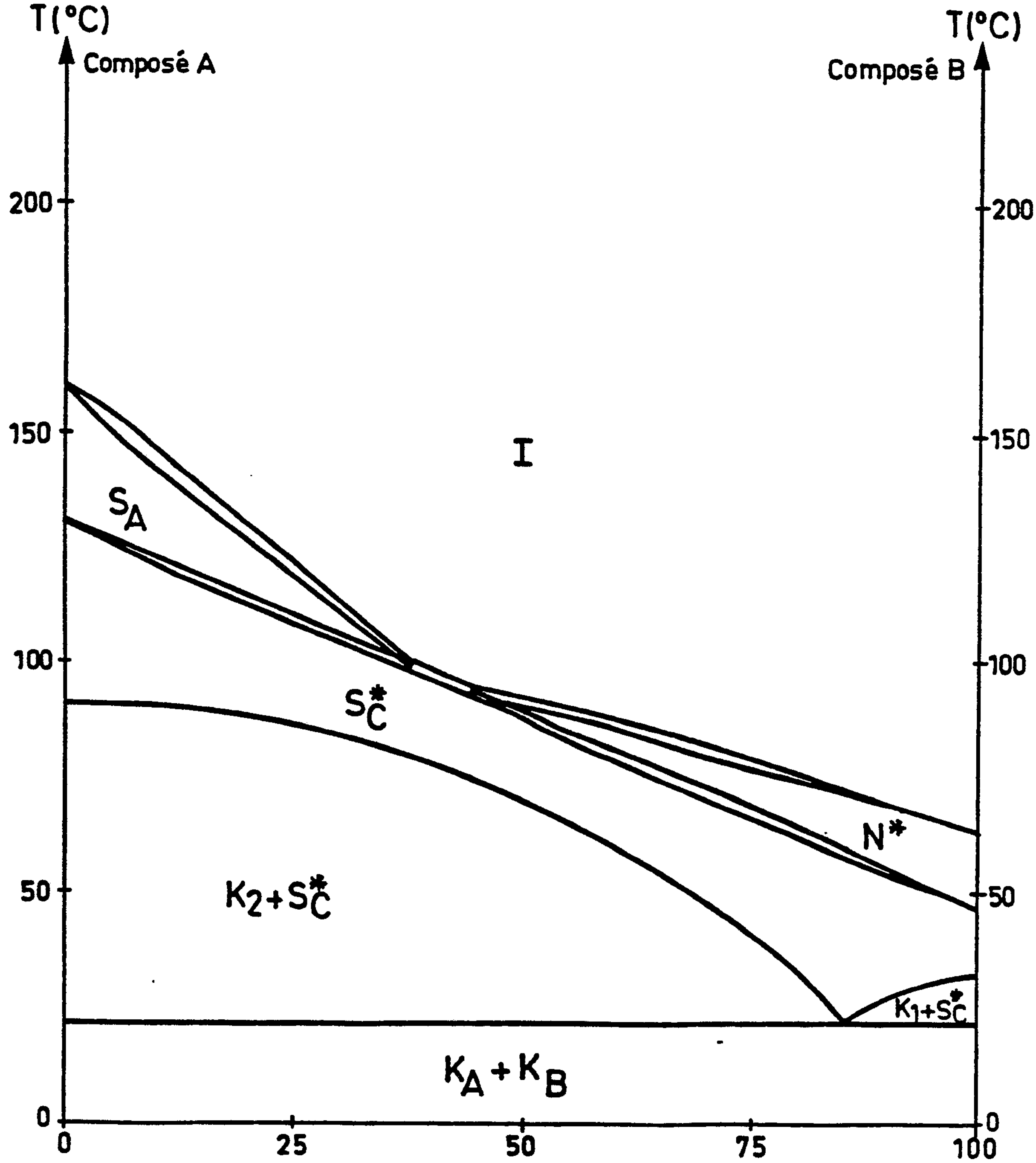
T(°C)
Composé A
T(°C)
Composé B
200
150
100
50
0
I
$S_A$
$S_C^*$
$N^*$
$K_2+S_C^*$
$K_1+S_C^*$
$K_A+K_B$
0
25
50
75
100

FIG.6